(19) **Europäisches Patentamt / European Patent Office / Office européen des brevets**

(11) **EP 2 638 436 B1**

(12) **FASCICULE DE BREVET EUROPEEN**

(45) Date de publication et mention
de la délivrance du brevet:
**27.11.2019 Bulletin 2019/48**

(21) Numéro de dépôt: **11767731.0**

(22) Date de dépôt: **12.10.2011**

(51) Int Cl.:
*F16C 25/04* (2006.01)     *G04B 17/32* (2006.01)
*G04B 31/00* (2006.01)     *F16C 32/04* (2006.01)

(86) Numéro de dépôt international:
**PCT/EP2011/067818**

(87) Numéro de publication internationale:
**WO 2012/062524 (18.05.2012 Gazette 2012/20)**

(54) **PIVOT MAGNÉTIQUE**

MAGNETISCHES DREHLAGER

MAGNETIC PIVOT BEARING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.11.2010 EP 10190510**

(43) Date de publication de la demande:
**18.09.2013 Bulletin 2013/38**

(73) Titulaire: **Montres Breguet S.A.**
**1344 L'Abbaye (CH)**

(72) Inventeurs:
- **MARÉCHAL, Sylvain**
  **39220 Bois-d'Amont (FR)**
- **SARCHI, Davide**
  **1020 Renens (CH)**
- **KARLEN, Olivier**
  **1807 Blonay (CH)**
- **TODESCHINI, Arnaud**
  **1343 Les Charbonnières (CH)**

(74) Mandataire: **Giraud, Eric**
**ICB**
**Ingénieurs Conseils en Brevets SA**
**Faubourg de l'Hôpital 3**
**2001 Neuchâtel (CH)**

(56) Documents cités:
**WO-A2-2006/045824     DE-A1- 19 854 063
DE-B- 1 220 224         DE-U- 1 734 590
FR-A- 1 115 966         GB-A- 739 979
GB-A- 2 407 402         US-A- 3 493 275
US-A- 3 496 780         US-A- 5 218 257**

## Description

Domaine de l'invention :

L'invention concerne un procédé d'orientation pour son guidage en pivotement d'un composant horloger en matériau au moins partiellement perméable magnétiquement, ou au moins partiellement magnétique, et comportant une première extrémité et une deuxième extrémité distantes d'un entraxe.

L'invention concerne encore un pivot d'horlogerie comportant un composant horloger en matériau au moins partiellement perméable magnétiquement ou au moins partiellement magnétique, lequel composant comporte une première extrémité et une deuxième extrémité distantes d'un entraxe.

L'invention concerne encore un mouvement d'horlogerie comportant au moins un tel pivot.

L'invention concerne encore une montre comportant au moins un tel mouvement d'horlogerie, ou/et au moins un tel pivot.

L'invention concerne le domaine de la micromécanique et en particulier de l'horlogerie, auquel elle est particulièrement bien adaptée.

Arrière-plan de l'invention :

La micromécanique, et en particulier la technique horlogère, utilise des solutions traditionnelles pour le positionnement de l'axe d'un composant, basées sur le frottement mécanique.

Dans l'application particulière à un composant pivotant incorporé dans un mouvement de montre, ou dans un oscillateur, un problème récurrent réside dans la forte dépendance du rendement et/ou du facteur de qualité du composant à la position de la montre dans laquelle ce composant est incorporé. En particulier le rendement et/ou le facteur de qualité est fortement inférieur quand une montre est en position verticale. Les solutions proposées pour résoudre ce problème privilégient souvent une diminution du rendement et/ou du facteur de qualité en position horizontale plutôt qu'une augmentation du rendement et/ou du facteur de qualité en position verticale.

Les problèmes à résoudre sont alors les suivants :

- l'égalisation du rendement et/ou du facteur de qualité dans toutes les positions de la montre,
- l'augmentation du rendement et/ou du facteur de qualité dans toutes les positions.

On connaît un document DE 12 11 460 B au nom de SIEMENS AG, qui décrit un mobile constitué par une tige solidaire d'un aimant tubulaire intérieur inséré dans un aimant tubulaire extérieur. Ce dernier est mobile, dans une cartouche coaxiale aux deux aimants, à l'encontre d'une face d'appui en butée à une extrémité, et à l'encontre d'un ressort maintenu par un bouchon à l'autre extrémité. Ce mobile est encore guidé axialement sur une broche solidaire de ce bouchon. A chaque extrémité axiale, ce mobile comporte une douille de protection du noyau fragile en céramique constitué par l'aimant intérieur. Les moyens de guidage en pivotement sont constitués par la coopération des deux aimants tubulaires, intérieur et extérieur. Toutefois, le maintien du mobile sur la première masse polaire ne correspond pas à un appui, puisqu'il y a solidarité entre ce mobile et l'aimant tubulaire intérieur, par l'intermédiaire d'un flasque et d'une de ces deux douilles. De ce fait, le mobile de ce brevet n'est pas libre par rapport à la première masse polaire constituée par l'aimant intérieur, mais seulement par rapport à la deuxième masse polaire constituée par l'aimant extérieur.

Le document DE 198 54 063 A1 au nom de JAGMANN VLADIMIR décrit un mobile en matériau magnétisable placé dans un entrefer entre deux masses polaires magnétiques générant un champ magnétique de direction perpendiculaire à l'attraction de la pesanteur, plus court que l'entrefer, portant sur une seule des masses polaires, et étant en semi-lévitation au voisinage de l'autre masse polaire. L'axe de pivotement du mobile est confondu avec un axe défini par les pôles des deux masses polaires.

Le document DE 12 20 224 B au nom de KERN & CO AG divulgue, de façon analogue, un mobile pivotant de la même façon, sans frottement dans un champ entre deux aimants. Ceux-ci présentent des extrémités rayonnées convexes en matériau dur, la surface d'appui du mobile sur une de ses extrémités rayonnées est aussi rayonnée convexe.

Le document FR 1 115 966 A au nom de JUNGHANS GEB AG décrit un régulateur à balancier rotatif, et utilise des champs magnétiques statiques pour réduire l'effet du poids de l'organe oscillant.

Un document DE 1 734 590 au nom de FRIEDRICH MAUTHE GmbH décrit également un dispositif magnétique d'allègement de la charge sur pivot.

Le document GB 739 979 A au nom de ROULEMENTS A BILLES MINIATURES divulgue un palier magnétique d'axe vertical pour un appareil de mesure tel qu'un galvanomètre.

Le document US 3 496 780 A au nom de CLAVELOUX NOEL décrit une suspension électrostatique pour des rotors de gyroscope obtenue avec une pluralité d'électrodes.

Le document US 3 493 275 A au nom de STONE RICHARD décrit un système de suspension verticale par lévitation selon la direction verticale, avec, disposés radialement dans un plan horizontal, des dipôles diamétralement opposés de même polarité, et alternés avec d'autres dipôles de polarité contraire

Le document US 5 218 257 A au nom de TOZONI OLEG décrit un système de lévitation magnétique pour charges lourdes selon la direction verticale, et une compensation automatique de la dérive.

Le document GB 2 407 402 A au nom de LEVINGSTON GIDEON décrit un spiral en céramique, et un balancier non-magnétique comportant des composants de différents matériaux de façon à ce que le moment d'inertie du balancier décroisse quand la température croît.

Le document WO 2006/045824 A2 au nom de TAG HEUER décrit un organe réglant avec remplacement du spiral par un jeu d'organes de rappel magnétiques pour créer un mouvement alternatif.

Résumé de l'invention :

L'invention se propose de pallier les problèmes de l'art antérieur, en mettant au point un procédé d'orientation d'un composant horloger, et plus précisément d'alignement de ce composant sur un axe de pivotement, permettant de réduire de façon drastique les frottements par rapport aux guidages mécaniques usuels, et, partant, d'améliorer l'indépendance de la qualité de fonctionnement d'un mouvement d'horlogerie par rapport à son orientation dans l'espace.

Pour y parvenir, l'invention met en œuvre un dispositif de guidage en pivotement de ce composant, de façon à constituer un pivot magnétique de composants d'horlogerie permettant un rendement et/ou un facteur de qualité indépendant de la position.

A cet effet l'invention concerne un procédé d'orientation, pour son guidage en pivotement, d'un composant horloger, avec un pivot magnétique, selon la revendication 1.

L'invention concerne encore un pivot d'horlogerie magnétique comportant un composant horloger selon la revendication 2.

L'invention concerne encore un mouvement d'horlogerie comportant au moins un tel pivot magnétique.

L'invention concerne encore une montre comportant au moins un tel mouvement d'horlogerie, ou/et au moins un tel pivot magnétique .

Description sommaire des dessins :

D'autres caractéristiques et avantages de l'invention seront mieux comprises à la lecture de la description détaillée qui va suivre, en référence aux dessins annexés, où :

- la figure 1 représente, de façon schématisée et en élévation, un dispositif de guidage d'un composant selon l'invention ;
- la figure 2 représente, de façon similaire à la figure 1, un composant destiné à être incorporé dans un pivot magnétique selon l'invention ;
- la figure 3 représente, de façon similaire à la figure 1, un pivot magnétique selon l'invention comportant le dispositif de la figure 1 et le composant de la figure 2 dans une position de coopération stable :

- la figure 4 représente, de façon similaire à la figure 1, un pivot magnétique selon l'invention, faisant apparaître le système de forces agissant sur le composant ;
- la figure 5 représente, de façon similaire à la figure 4, le système de forces agissant sur le composant représenté dans une position provoquée instable ;
- la figure 6 représente, en coupe longitudinale selon son axe de pivotement, un pivot magnétique selon l'invention comportant un dispositif de guidage d'un composant selon l'invention, dans un premier mode de réalisation;
- la figure 7 représente, de façon similaire à la figure 6, un pivot magnétique selon un autre mode de réalisation;
- la figure 8 représente, de façon schématisée, partielle et en perspective, une pièce d'horlogerie comportant un mouvement incorporant un pivot magnétique selon l'invention, notamment selon les modes de réalisation des figures 6 ou 7 ;
- la figure 9 représente un composant constitué par un balancier, inséré dans un dispositif de guidage d'un composant selon l'invention ;
- la figure 10 représente, de façon schématisée, le rapport des forces agissant sur un composant ;
- la figure 11 représente un diagramme de croissance de la densité de force magnétique résultante en fonction de l'abscisse selon l'axe longitudinal de la figure 10 ;
- la figure 12 représente, de façon schématisée et en élévation, une variante de dispositif de guidage d'un composant selon l'invention ;
- la figure 13 représente, de façon schématisée, et en coupe longitudinale selon un axe de pivotement, une variante de réalisation d'un dispositif selon l'invention, munie d'un dispositif amortisseur ;
- la figure 14 représente, de façon schématisée, partielle, et en perspective, un élément de l'amortisseur de la variante de la figure 13.

Description détaillée des modes de réalisation préférés :

L'invention met au point un procédé particulier d'orientation pour son guidage en pivotement d'un composant horloger 1, et plus précisément d'alignement de ce composant sur un axe de pivotement D.

Le but est de procurer une alternative aux pivots traditionnels, et de réduire de façon drastique les frottements par rapport aux guidages mécaniques usuels, et, partant, d'améliorer l'indépendance de la qualité de fonctionnement d'un mouvement d'horlogerie par rapport à son orientation dans l'espace.

Pour mettre en œuvre ce procédé, on utilise un dispositif de guidage en pivotement de ce composant, de façon à constituer un pivot magnétique de composants d'horlogerie permettant un rendement et/ou un facteur de qualité indépendant de la position.

Du fait de certaines caractéristiques particulières qui seront exposées plus loin, notamment l'emploi préférentiel de forces magnétiques de grande intensité par rapport aux forces de pesanteur, l'invention trouve plus particulièrement son application dans le domaine de la micromécanique, et plus particulièrement le domaine de l'horlogerie, pour lequel elle a été développée, et a fait l'objet de prototypes fonctionnels. En effet, la faible masse des composants horlogers se traduit par un poids très faible, et il est possible de générer, de façon compatible avec l'encombrement d'une montre ou similaire, des champs magnétiques susceptibles de générer sur ce composant des forces ou/et des couples d'attraction supérieurs à au moins dix fois la force ou le couple d'attraction de la pesanteur. Aussi l'invention est ici décrite pour cette application horlogère préférée, et directement utilisable dans l'état actuel de la technique des aimants, que l'on peut mettre en oeuvre dans les dimensions imposées avec les intensités de champs magnétiques requises, sans développement particulier.

L'invention propose d'améliorer les conditions de pivotement d'un composant, en réduisant les frottements par rapport à l'art antérieur, et en alignant en permanence son axe principal d'inertie, appelé ci-après pour simplifier axe longitudinal, sur un axe de pivotement théorique. Naturellement l'invention est applicable aussi à des composants non équilibrés, ou pivotant autour d'un autre axe que leur axe principal d'inertie, mais l'invention apporte ses plus grands avantages dans ce cas préféré où l'axe principal d'inertie du composant doit être confondu avec l'axe de pivotement.

Le composant peut ainsi être, de façon nullement limitative, un balancier, un ensemble balancier-spiral, une roue d'échappement, une ancre, une roue de rouage, un rochet, un cliquet, une bascule, un barillet, un rotor de remontage automatique, un disque de quantième ou de phase de lune, un marteau, un cœur, une roue à colonnes, ou tout autre composant usuellement mobile en pivotement.

L'invention réalise un système axe-pivots d'un tel composant par des forces magnétiques.

Dans la suite de l'exposé, on définit par matériaux « perméables magnétiquement », des matériaux qui ont une perméabilité relative comprise entre 100 et 10000, comme des aciers, qui ont une perméabilité relative voisine de 100 pour des axes de balanciers par exemple, ou voisine de 4000 pour les aciers utilisés couramment dans les circuits électriques, ou encore d'autres alliages dont la perméabilité relative atteint des valeurs de 8000 à 10000.

On appellera matériaux « magnétiques », par exemple dans le cas de masses polaires, des matériaux aptes à être aimantés de façon à présenter un champ rémanent compris entre 0.1 et 1.5 Tesla, comme par exemple le « Neodymium Iron Boron » d'une densité d'énergie magnétique Em voisine de 512 kJ/m$^3$ et donnant un champ rémanent de 0.5 à 1.3 Tesla. Un niveau de champ rémanent inférieur, vers la partie inférieure de la fourchette peut être utilisé en cas de combinaison, dans un couple d'aimantation, d'un tel matériau magnétique avec un composant antagoniste perméable magnétiquement de perméabilité élevée, plus proche de 10000, dans la fourchette de 100 à 10000.

On appellera matériaux « paramagnétiques » des matériaux de perméabilité magnétique relative comprise entre 1.0001 et 100, par exemple pour des entretoises interposées entre un matériau magnétique et un composant antagoniste perméable magnétiquement, ou encore entre deux matériaux magnétiques, par exemple une entretoise entre un composant et une masse polaire.

On appellera matériaux «diamagnétiques » des matériaux de perméabilité magnétique relative inférieure à 1.

On appellera enfin matériaux «magnétiques doux», pour ne pas dire amagnétiques, notamment pour des blindages, des matériaux ayant une perméabilité élevée mais haute saturation, car on ne veut pas qu'ils soient aimantés de manière permanente: ils doivent conduire le mieux possible le champ, de manière à réduire le champ à leur extérieur. De tels composants peuvent alors protéger aussi un système magnétique des champs externes. Ces matériaux sont choisis de préférence de perméabilité magnétique relative comprise entre 50 et 200, et avec un champ de saturation supérieur à 500 A/m.

Des matériaux qualifiés d'«amagnétiques », ont quant à eux une perméabilité magnétique relative très légèrement supérieure à 1, et inférieure à 1.0001, comme typiquement le silicium, le diamant, le palladium et similaires. Ces matériaux peuvent en général être obtenus par des technologies MEMS ou par le procédé « LIGA ».

Dans la suite de l'exposé, on définit par matériaux « conducteurs», des matériaux dont la résistivité à température ambiante (T=20°C) est inférieure à 1 $\mu\Omega$ m) : par exemple, l'argent, l'or et l'aluminium sont des excellents conducteurs.

Dans la suite de l'exposé, on définit par matériaux « isolants», des matériaux dont la résistivité à température ambiante est supérieure à 10'000 M$\Omega$ m) et dont la rigidité diélectrique est supérieure à 10 kV/mm: par exemple, les matériaux vitreux ou plastiques sont généralement des bons isolants.

Pour parvenir à garantir un rendement et un facteur de qualité élevés dans toutes les positions d'une pièce d'horlogerie, il faut réussir à minimiser les effets de l'attraction de la pesanteur. Il est possible, pour les dimensions horlogères typiques et en utilisant des micro-aimants commerciaux, de générer des forces magnétiques supérieures à la force de gravité et au couple agissant sur le composant pendant le fonctionnement. Un système régi par des forces magnétiques est beaucoup moins sensible à la gravité, et donc aux changements de position de la montre, que les systèmes mécaniques traditionnels.

L'invention est plus particulièrement décrite avec une application de forces magnétiques. Une variante voisine de l'invention concerne de la même façon l'application de forces électrostatiques, ou encore à une combinaison ou un panachage de forces magnétiques et électrostatiques. Notamment le composant 1 pivotant sur un axe D s'étend, selon la direction de cet axe D, entre une première extrémité 2 et une deuxième extrémité 3 qu'il comporte. Cette première extrémité 2 et cette deuxième extrémité 3 peuvent être l'objet d'un traitement différent, par exemple la première extrémité 2 peut être soumise à un faisceau de forces de type magnétique, et la deuxième extrémité 3 peut être soumise à un faisceau de forces de type électrostatique, ou inversement. Une même extrémité peut aussi être soumise, de façon cumulative, à un faisceau de forces magnétiques et à un faisceau de forces électrostatiques.

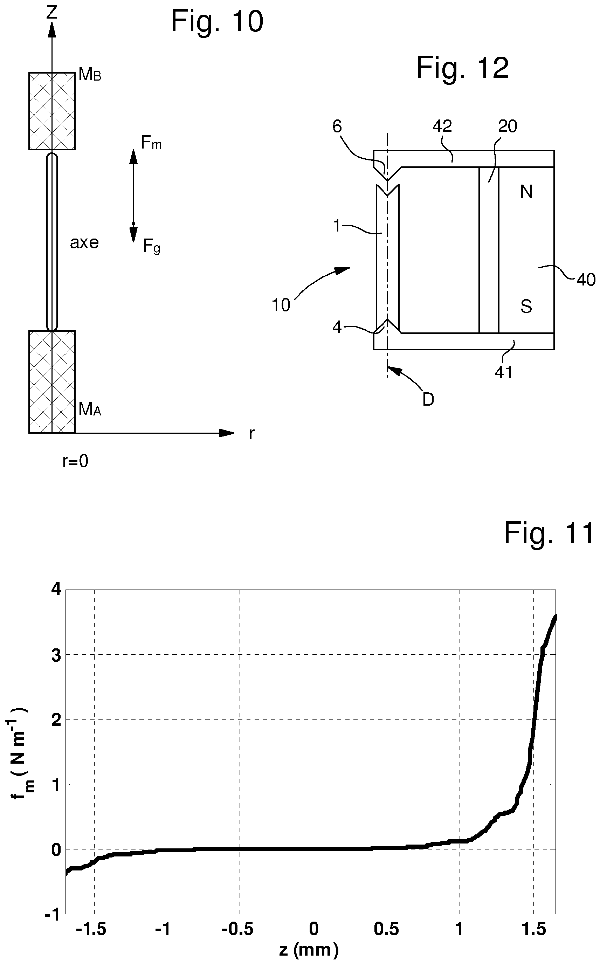

Une première construction, tel que visible sur la figure 10, consiste à introduire des masses polaires, de préférence constituées par un ou plusieurs micro-aimants, dans les pivotements du composant, réglés pour magnétiser, un axe, par exemple réalisé en matériau magnétique doux, que comporte le composant, et produire ainsi une force d'attraction magnétique entre des paliers et l'axe du composant.

L'application horlogère préférée et décrite ici incite à utiliser, dans la version où on utilise des forces d'origine magnétique, des aimants permanents pour la constitution des masses polaires utilisées par l'invention, mais il est évident que pour d'autres applications, notamment statiques, l'emploi d'électroaimants est également possible. L'emploi du terme « aimant» dans la suite de l'exposé désigne de façon générale une masse polaire magnétisée.

De part et d'autre de ces première 2 et deuxième 3 extrémités du composant 1, on dispose, d'une part des moyens de guidage en pivotement ou, de préférence selon l'invention des moyens d'attraction de la première extrémité 2 maintenue en appui sur une première masse polaire 4 distincte du composant 1, et d'autre part, au voisinage d'une deuxième masse polaire 6 distincte du composant 1, des moyens de guidage en pivotement de la deuxième extrémité 2 ou de préférence des moyens d'attraction de cette deuxième extrémité 2 vers la deuxième masse polaire 6.

Le composant 1 est, au moins au voisinage de sa première extrémité 2 et de sa deuxième extrémité 3, de préférence réalisé dans un matériau magnétiquement perméable. Dans une réalisation particulière de l'invention, ce matériau est, encore, aimanté.

Le composant 1 est mobile dans une chambre 1A. On entend ici par masse polaire une masse, qui, au moins au voisinage de la chambre 1A, est réalisée dans un matériau magnétiquement perméable, ou, dans une réalisation particulière et préférée de l'invention, dans un matériau aimanté.

Cette masse polaire 4 ou 6 ne fait pas partie du composant 1, et est, ainsi, située en périphérie ou à proximité de la chambre 1A :

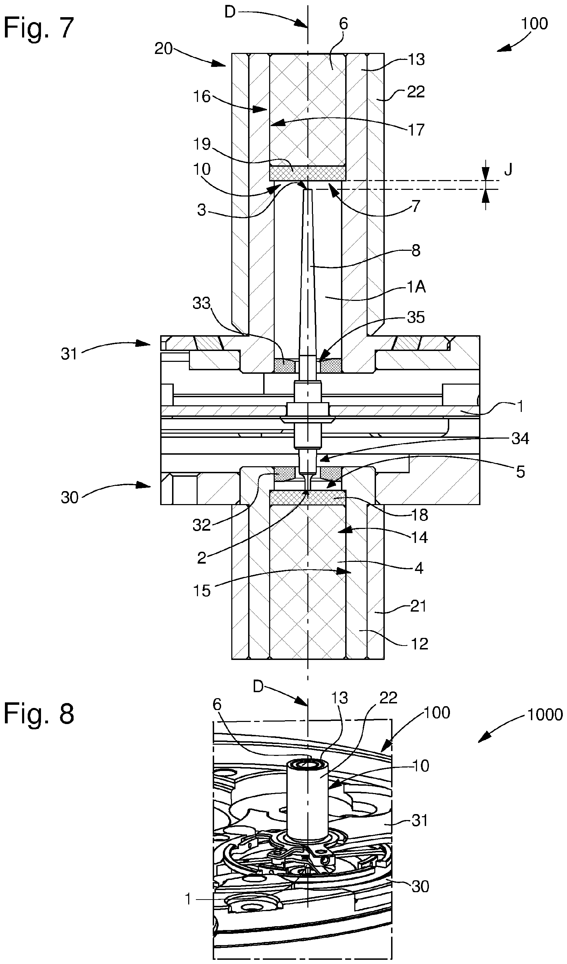

- dans un premier mode de réalisation, par exemple tel que visible sur les figures 7, 9 et 13, la masse polaire est séparée de la chambre 1A par une entretoise laquelle comporte une surface d'appui ou de butée pour le composant 1. Sur la figure 7, une première masse polaire 4 est ainsi séparée du composant 1 par une entretoise 18, laquelle comporte une telle première surface d'appui 5, et une deuxième masse polaire 6 est séparée du composant 1 par une entretoise 19 qui comporte une telle deuxième surface de butée 7. Dans une telle variante, les masses polaires, quoique sans contact direct avec le composant 1, interagissent avec lui dans, selon le cas, une attraction ou une répulsion magnétique: ou bien une extrémité axiale selon la direction axiale D du composant 1 est aimantée et coopère avec la masse polaire la plus proche, qui est magnétiquement perméable ou conductrice sous l'action d'une force magnétique , ou bien c'est l'inverse, une extrémité axiale selon la direction axiale D du composant 1 est magnétiquement perméable, et coopère avec la masse polaire la plus proche, qui est aimantée;

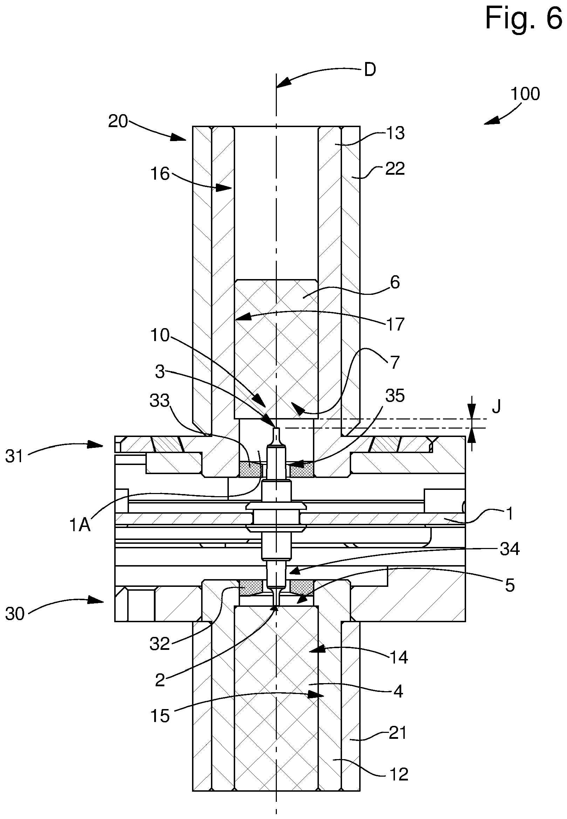

- dans un autre mode de réalisation, tel que visible sur la figure 6, une telle masse polaire peut comporter une surface constituant une des surfaces latérales de la chambre 1A, au voisinage de laquelle ou bien en contact avec laquelle est susceptible de venir la première extrémité 2 ou la deuxième extrémité 3 du composant 1. De préférence, quand le composant 1 est un mobile pivotant autour d'un axe de pivotement D, cette surface de la masse polaire est située dans le prolongement de cet axe D. L'interaction magnétique se fait comme dans le cas précédent, mais sans les entretoises: le composant 1 est alors en contact direct avec une des masses polaires ;

- d'autres modes concernent des réalisations différentes à chaque extrémité du composant 1 : contact direct d'un côté, force d'attraction ou de répulsion indirecte de l'autre.

L'invention est plus particulièrement présentée ici avec le cas préféré où le composant 1 est soumis à un faisceau de forces d'attraction. Naturellement il est possible d'envisager de façon similaire un faisceau différentiel de forces de répulsion, en maintenant le composant 1 sur l'axe D grâces à des masses polaires réparties annulairement autour de cet axe. Toutefois, si cette variante offre l'avantage d'autoriser une lévitation complète du composant 1, elle présente l'inconvénient d'occuper, annulairement autour du composant 1, un volume annulaire important. Par ailleurs, la lévitation complète ne permet plus le positionnement axial parfait du composant 1 sur l'axe D que procure l'invention, en raison de l'appui du composant 1 à l'une de ses extrémités.

La première masse polaire 4 et la deuxième masse polaire 6 sont distinctes du composant 1, et sont chacune située en périphérie ou à proximité de la chambre 1A, et sont chacune en matériau au moins partiellement magnétique ou respectivement au moins partiellement perméable magnétiquement. Le composant 1 est monté libre dans la chambre 1A entre les masses polaires 4 et 6 et de façon à prendre appui sur une surface d'appui à proximité de l'une seule de ces masses polaires 4, 6.

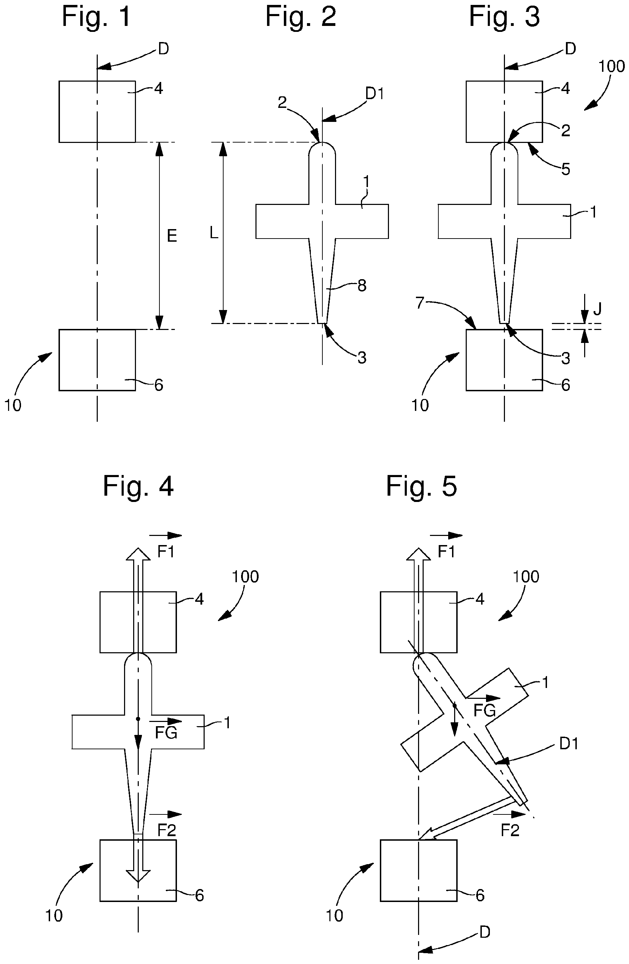

La figure 10 est un schéma de principe bidimensionnel à symétrie axiale d'une réalisation de composant 1, par exemple un balancier, dans une version où les forces d'attraction sont d'origine magnétique: l'axe longitudinal défini par une première extrémité 2 et une deuxième extrémité 3 du composant en matériau magnétisable ou encore magnétique, se trouve entre deux masses polaires, notamment aimants permanents $M_A$ et $M_B$, dont la polarisation magnétique est dirigée selon une direction z qui est l'axe de pivotement théorique du composant, et sur laquelle il s'agit d'aligner l'axe longitudinal du composant. On appellera ci-après « axe du composant » une partie arbrée de ce composant 1 qui s'étend entre la première extrémité 2 et la deuxième extrémité 3 de celui-ci. L'appui de l'axe du composant 1 peut être garanti, ou bien directement sur ce ou ces aimants, ou par deux pierres interposées entre les aimants et l'axe du composant, ou par un traitement de surface des aimants. Tel que visible sur la figure 7 d'une réalisation particulière, l'axe du composant 1 peut ainsi se faire sur une entretoise 18 équipant la première masse polaire 4, la deuxième masse polaire 6 pouvant aussi comporter une telle entretoise 19. Ces entretoises doivent laisser passer le champ magnétique, elles ont essentiellement un rôle tribologique pour celle qui constitue une face d'appui, et de protection des masses polaires en cas de choc. Les figures 3, 4, et 6 illustrent un appui direct du composant 1 sur une première masse polaire 4, et la possibilité d'un appui intermittent, par exemple lors du montage ou en cas de choc, cet appui étant également direct, sur une deuxième masse polaire 6. La taille et/ou l'énergie magnétique des aimants et la longueur de l'axe du composant sont optimisés pour maximiser la force d'attraction $F_m$ entre l'axe et un des deux aimants $M_B$:

Selon l'invention, la force d'attraction $F_m$ est de beaucoup supérieure à la force de gravité $F_g$, de préférence au moins dans un rapport de 10 à 1, et l'axe appuie de façon stable sur un seul des deux aimants pour toutes les positions de la pièce d'horlogerie ou de la montre. Les deux forces appliquées sur le centre de gravité du composant sont schématisées dans le cas où $F_g$ est opposée à $F_m$.

Un couple magnétique de rappel agit sur l'axe quand l'axe est dévié de la direction z: la géométrie est optimisée pour que le couple de rappel magnétique soit supérieur au couple produit par la force de gravité et au couple admis au composant pour stabiliser l'orientation de l'axe dans la direction z.

La force magnétique qui agit sur l'axe magnétisé est proportionnelle à son aimantation $M_{axe}(r,z)$ et au gradient du champ magnétique H produit par les deux aimants :

$$\vec{F}_m = \mu_0 \int_{V_{axe}} d\vec{r}\, \vec{M}_{axe} \cdot \vec{\nabla} H$$

où l'intégration est faite sur le volume de l'axe $V_{axe}$.

Cette relation permet d'optimiser la taille et/ou l'énergie magnétique des aimants et la géométrie de l'axe du composant, pour maximiser la force d'attraction entre l'axe et un des deux aimants, $M_B$ dans le cas de la figure 10. Par conséquent, l'axe appuie sur un seul des deux aimants dans toutes les positions.

La force d'attraction étant supérieure à la force de gravité et à la force maximale appliquée sur le composant, cette configuration est stable.

L'invention améliore avantageusement l'efficacité des solutions antichoc traditionnelles, qui sont donc avantageusement intégrables dans cette invention, parce qu'elle garantit que l'axe soit ramené dans la position d'équilibre correcte après un choc, les pivotements mécaniques traditionnels ne le garantissant pas. L'aimant supérieur a la fonction de stabiliser l'orientation de l'axe. En fait, le couple magnétique agissant sur l'axe est donné par :

$$\vec{C}_m = -\mu_0 \int d\vec{r}\, \vec{M}_{axe} \times \vec{H}$$

Et ce couple magnétique est nul seulement si l'axe est orienté comme les lignes de champ, donc dans la direction z. Si l'orientation de l'axe est perturbée et s'écarte de la direction z, le couple de rappel $C_m$ permet le recentrage dans la position d'équilibre.

La figure 11 illustre la densité de force magnétique sur l'axe du composant, en l'occurrence un balancier de montre dans le cas d'espèce, pour des paramètres réels. La force magnétique résultante est $F_m = 10$ mN, dirigée vers l'aimant $M_B$, donc un ordre de grandeur plus grand que celui de la force de gravité, et créant un couple supérieur au couple maximal appliqué sur le composant par son environnement.

L'invention présente l'avantage de fortement confiner le champ magnétique à l'intérieur de l'axe du composant, les lignes de champ sont pratiquement parallèles à la direction z. La densité de force magnétique résultante pour des paramètres réels est montrée en figure 11. Puisque la composante positive, correspondante à une force dans la direction de $M_B$, est plus importante, la force nette qui agit sur le balancier est dirigée vers $M_B$.

Puisque la force agissant sur l'axe ne dépend que faiblement de la position de l'axe sur la surface d'appui, le champ étant sensiblement homogène dans le centre de la surface des masses polaires, notamment aimants, l'axe est libre de tourner autour de z, sans frottement additionnel. Donc la dissipation d'énergie engendrée par l'oscillation du composant est fortement réduite à l'instar du frottement mécanique: le rendement et/ou le facteur de qualité peuvent être augmentés dans toutes les positions.

Dans une configuration alternative, l'axe du composant peut être lui-même un aimant permanent, soit entourée de masses polaires en matériau magnétisable, soit elles-mêmes magnétisées, ce qui maximise alors les forces et couples magnétiques en présence, et minimise d'autant plus l'influence de la pesanteur.

Dans une configuration alternative, l'axe et/ou la planche du composant peut être composé par un matériau diamagnétique, par exemple en graphite pyrolytique, et le pivotement être composé par plusieurs aimants alternés, pour permettre une lévitation diamagnétique et le positionnement du composant.

Les avantages découlant des caractéristiques de l'invention sont nombreux.

- le rendement et/ou le facteur de qualité du composant est identique dans toutes les positions de la pièce d'horlogerie, avec des variations inférieures à 5 % ;
- le rendement et/ou le facteur de qualité est augmenté dans toutes les positions par rapport à l'emploi de pivots traditionnels ;
- dans le cas où le composant est oscillant, notamment un balancier, son amplitude d'oscillation est augmentée et identique dans toutes les positions ;
- les frottements et la dissipation d'énergie sont minimisés ainsi que les variations de couple ;
- le nombre de constituants est limité comparé à d'autres solutions ;
- l'invention est antichoc de par sa construction;
- le système peut être intégré à d'autres éléments magnétiques.
- l'invention est facile à intégrer dans tout type de pièce d'horlogerie ou de montre, notamment mécanique, qu'elle soit simple ou à complications, ou dans tout appareil scientifique portable, ou similaire.

Une variante d'exécution de l'invention avec des aimants non-alignés peut présenter un intérêt dans certains cas de figure, en particulier pour des composants pour lesquels l'effet du couple parasite est négligeable et pour lesquels une configuration non-alignée est plus simple à réaliser, en raison de la forme ou position du composant

Pour un composant générique, il faut aussi considérer que l'invention permet aussi, avantageusement, l'utilisation d'axes courbes : dans ce cas, une direction différente des deux masses polaires, notamment aimants, est obligatoire.

Quand les lignes de champ des deux masses polaires, notamment aimants ne sont pas alignées, le système recherche une position d'équilibre suffisamment stable. Si les deux directions ne sont pas trop différentes, l'axe longitudinal du composant peut rester dans un régime dynamique indéfiniment, en passant d'une position instable à une autre position instable. Toutefois, un désalignement a pour effet de réduire la force magnétique appliquée sur le composant, et, surtout, le couple de rappel. De ce fait, la stabilité est alors moindre que dans le cas préféré de lignes de champ alignées. Quand le composant fait partie d'un oscillateur, le désalignement est à éviter, car il introduirait un couple magnétique radial ayant un effet parasite sur la marche.

Il est possible d'imaginer différentes variantes d'un pivot magnétique selon l'invention, selon la constitution et les propriétés magnétiques du composant: le fait d'avoir un axe en matériau homogène permet de fermer facilement les lignes de champ. Une faible inhomogénéité dans la direction longitudinale, associée à des variations de densité, de section ou de concentrations de l'alliage, peut être utilisée pour augmenter volontairement l'asymétrie de la force, et donc augmenter la force d'attraction sur une des deux cotés. Le matériau du composant, du moins au niveau des première et deuxième extrémités, est de préférence ferromagnétique, car un matériau paramagnétique produirait une force trop faible.

Il est, encore, possible d'intercaler une région amagnétique, c'est-à-dire à très faible perméabilité magnétique, entre des régions magnétiques lesquelles sont situées aux première et deuxième extrémités, si celles-ci sont aimantées de manière permanente: cette disposition permet d'avoir quand même une force et un couple suffisamment grands.

Les figures 1 à 14 illustrent la réalisation de l'invention.

L'invention concerne ainsi un procédé d'orientation pour son guidage en pivotement d'un composant 1 horloger en matériau au moins partiellement perméable magnétiquement ou respectivement au moins partiellement magnétique, ce composant étant monté en pivot dans une chambre 1A entre une première extrémité 2 et une deuxième extrémité 3 que comporte ce composant 1.

Selon l'invention, on crée de part et d'autre de ses première extrémité 2 et deuxième extrémité 3 deux champs magnétiques tendant chacun à attirer le composant 1 sur une masse polaire 4, 6, et on crée un déséquilibre entre les champs magnétiques autour du composant 1 de manière à créer un différentiel de forces sur ce dernier pour plaquer une première extrémité 2 sur une première surface de contact 5 d'une première masses polaires 4, et pour maintenir l'autre de ses extrémités, la deuxième extrémité 3, à distance d'une deuxième surface de contact 7, que comporte la deuxième masse polaire 6. Ce déséquilibre entre les champs magnétiques est créé et existe autour de l'entrefer constitué par l'espace compris entre ces surfaces de contact 5 et 7, et qui délimite localement la chambre 1A.

Ces champs magnétiques sont asymétriques l'un à l'autre et d'intensité différente l'un de l'autre.

L'invention est réalisable, soit par la création de champs magnétiques au niveau des masses polaires 4 et 6, soit au niveau du composant 1 lui-même, soit à la fois au niveau des masses polaires 4 et 6 et du composant 1.

Lorsque des champs magnétiques sont créés au niveau des masses polaires 4 et 6, le déséquilibre entre les champs magnétiques existe, selon l'invention, que le composant 1 soit présent ou non dans l'entrefer : les champs sont asymétriques l'un par rapport à l'autre, et d'intensité différente l'un de l'autre, et, selon l'invention, le déséquilibre créant un différentiel de forces sur le composant ne dépend pas de la position de celui-ci dans cet entrefer, mais il dépend seulement des champs asymétriques créés au niveau des masses polaires 4 et 6.

Lorsque des champs magnétiques sont créés au niveau du composant 1 lui-même, ils sont là aussi d'intensité différente au niveau des extrémités 2 et 3 du composant 1.

Lorsque des champs magnétiques sont créés à la fois au niveau des masses polaires 4 et 6 et du composant 1, ils sont dimensionnés de façon à ce que leur résultante soit asymétrique, tant au niveau des masses polaires 4 et 6, que des extrémités 2 et 3 du composant 1.

Dans une première variante préférée, on crée de part et d'autre de sa première extrémité 2 et de sa deuxième extrémité 3 deux champs magnétiques sensiblement de même direction et de même sens. Cette première variante s'applique en particulier pour un composant dont l'axe est conducteur et magnétisable depuis sa première extrémité 2 jusqu'à sa deuxième extrémité 3, et c'est ainsi que la densité de champ magnétique se concentre le mieux autour de l'axe de pivotement D.

Dans une autre variante, on crée de part et d'autre de sa première extrémité 2 et de sa deuxième extrémité 3 deux champs magnétiques sensiblement de même direction et de sens opposés. Cette autre variante s'applique quand il y a une discontinuité électrique ou/et magnétique entre la première extrémité 2 et la deuxième extrémité 3, par exemple si un composant à très faible perméabilité magnétique comporte uniquement deux demi-arbres perméables magnétiquement ou magnétiques à ses extrémités 2 et 3. Naturellement, la configuration de champs de la première variante est aussi applicable à ce cas. Une variante également réalisable est celle où le composant 1 est monobloc, et où la discontinuité est réalisée par un procédé de fabrication particulier, par traitement de surface par exemple.

Dans une exécution particulière et préférée dans le cas où le composant est un balancier ou un organe d'oscillateur, on crée de part et d'autre de sa première extrémité 2 et de sa deuxième extrémité 3 les deux champs magnétiques de même direction.

Dans la variante illustrée par les figures, selon l'invention, on oriente le composant horloger 1 sur un axe de pivotement D défini par l'agencement des deux champs magnétiques et de leurs masses polaires respectives 4, 6, et on génère de part et d'autre de la première extrémité 2 et de la deuxième extrémité 3, au niveau d'une première 4 et d'une deuxième masse polaire 6, un premier champ magnétique et un deuxième champ magnétique de sens opposés, chacun de symétrie de révolution autour du axe de pivotement D et tendant à attirer le composant 1 vers sa masse polaire 4, 6. La densité du premier champ magnétique au voisinage de la première extrémité 2 est choisie supérieure à celle du deuxième champ magnétique au voisinage de la deuxième extrémité 3. de façon à attirer la première extrémité 2 au contact de la première masse polaire 4. On définit encore l'entrefer E des masses polaires 4, 6 supérieur, de la valeur d'un jeu fonctionnel déterminé J, à l'entraxe L entre la première extrémité 2 et la deuxième extrémité 3.

Un dispositif 10 de guidage en pivotement d'un composant 1 horloger, convient à la mise en oeuvre de ce procédé d'orientation pour son guidage en pivotement. Ce composant 1 doit être en matériau au moins partiellement perméable magnétiquement ou respectivement au moins partiellement magnétique, ce composant étant monté en pivot dans une chambre 1A entre une première extrémité 2 et une deuxième extrémité 3 que comporte ce composant 1.

Le dispositif de guidage 10 comporte, de part et d'autre des première 2 et deuxième 3 extrémités, d'une part des moyens d'attraction de la première extrémité 2 pour le maintien de cette première extrémité 2 en appui sur une première masse polaire 4, et d'autre part, au voisinage d'une deuxième masse polaire 6, des moyens d'attraction de cette deuxième extrémité 3 vers la deuxième masse polaire 6.

Plus particulièrement, ce dispositif de guidage 10 comporte, de part et d'autre des première 2 et deuxième 3 extrémités, à une distance d'entrefer E supérieure, de la valeur d'un jeu fonctionnel J déterminé à l'entraxe L entre la première extrémité 2 et la deuxième extrémité 3, une première surface d'une première masse polaire 4 et une deuxième surface d'une deuxième masse polaire 6.

Ces masses polaires 4 et 6, distinctes du composant 1, sont agencées pour, ou bien être attirée chacune par un champ magnétique émis par une des première extrémité 2 ou deuxième extrémité 3 du composant 1, ou bien, de façon préférée, pour générer chacune un champ magnétique attirant une des première extrémité 2 ou deuxième extrémité 3 du composant 1.

Ces champs magnétiques sont d'intensité différente entre eux, au niveau de la première extrémité 2 et de la deuxième extrémité 3, de façon à ce que les forces d'attraction magnétiques s'exerçant sur le composant 1 à ses deux extrémités 2 et 3 soient d'intensité différente, de façon à attirer ce composant 1 par une de ses deux extrémités 2 et 3, en contact direct ou indirect sur une seule des surfaces des masses polaires 4 et 6.

Dans une variante particulière, la première masse polaire 4 et la deuxième masse polaire 6 sont chacune mobile dans une chambre entre deux butées.

Dans une variante particulière, les moyens d'attraction de la première extrémité 2 d'une part, et les moyens d'attraction de ladite deuxième extrémité 3 d'autre part, sont mobiles le long d'une direction axiale D entre des butées.

Ce dispositif 10 comporte, à une distance d'entrefer E supérieure, de la valeur d'un jeu fonctionnel déterminé J, à l'entraxe L entre la première extrémité 2 et la deuxième extrémité 3 une première surface 5 d'une première masse polaire 4 et une deuxième surface 7 d'une deuxième masse polaire 6.

Ces masses polaires 4 et 6 sont agencées pour, ou bien être attirée chacune par un champ magnétique émis par une des première extrémité 2 ou deuxième extrémité 3 du composant 1, ou bien pour générer chacune un champ magnétique attirant une des première extrémité 2 ou deuxième extrémité 3 du composant 1, de façon à ce que les forces d'attraction magnétiques s'exerçant sur le composant 1 à ses deux extrémités 2, 3 soient d'intensité différente, de façon à attirer le composant 1 par une de ses deux extrémités 2, 3, notamment sa première extrémité 2, en contact direct ou indirect sur une seule des surfaces 5, 7, respectivement sur la première surface 5, des masses polaires 4, 6, respectivement de la première masse polaire 4.

Les champs magnétiques qui s'exercent au voisinage de la première extrémité 2 et de la deuxième extrémité 3 sont d'intensité différente l'un de l'autre, et sont asymétrique.

Selon l'invention la première masse polaire 4 et la deuxième masse polaire 6 sont chacune en matériau magnétique, ou perméable magnétiquement, et sont magnétiques, si le composant 1 ne l'est pas. La première masse polaire 4 et la deuxième masse polaire 6 définissent ensemble un axe de pivotement D sur lequel est aligné un axe longitudinal D1 du composant 1 joignant les première extrémité 2 et deuxième extrémité 3 de ce dernier, lorsque le composant 1 est inséré entre les première masse polaire 4 et deuxième masse polaire 6.

Selon l'invention, la première masse 4, respectivement la première extrémité 2, génère au voisinage de la première surface 5 un premier champ magnétique selon l'axe de pivotement D tendant à rapprocher la première masse 4 de la première extrémité 2, et de densité supérieure à la densité d'un deuxième champ magnétique selon l'axe de pivotement D généré au voisinage de la deuxième surface 7 par la deuxième masse 6, respectivement la deuxième extrémité 3, le deuxième champ magnétique tendant à rapprocher la deuxième masse 6 de la deuxième extrémité 3, de façon à ce que la première extrémité 2 soit maintenue en contact avec la première surface 5, et à ce que l'axe longitudinal D1 du composant 1 soit confondu avec l'axe de pivotement D, la deuxième extrémité 3 restant alors à distance de la deuxième surface 7.

Avantageusement la distance d'entrefer E entre la première surface 5 et la deuxième surface 7 est dimensionnée de façon à assurer le jeu fonctionnel déterminé J sur toute la plage de températures d'utilisation du dispositif de guidage 10 et du composant 1. Ce jeu est strictement positif, ce qui exclut serrage ou frottement gras. De préférence, ce jeu fonctionnel déterminé J est supérieur ou égal à 0,020 mm.

De préférence, le choix de la perméabilité magnétique du matériau du composant 1, et la détermination de l'aimantation, selon le cas, de la première masse 4 et de la deuxième masse 6 d'une part, ou/et du composant 1 d'autre part, sont effectués de façon à ce que le premier champ magnétique et le deuxième champ magnétique exercent sur le composant 1 des forces d'attraction au moins supérieures de 30% à la force d'attraction de la pesanteur sur le composant 1, et de préférence supérieures à cinq à dix fois la force d'attraction de la pesanteur sur le composant 1 pour obtenir le meilleur comportement lors du mouvement de la pièce d'horlogerie.

De la même façon, la perméabilité magnétique du matériau du composant 1 et la détermination de l'aimantation, selon le cas, de la première masse 4 et de la deuxième masse 6 d'une part, ou/et du composant 1 d'autre part, sont effectués de façon à ce que le premier champ magnétique et le deuxième champ magnétique exercent sur le composant 1 des couples d'attraction supérieurs à dix fois au couple d'attraction de la pesanteur sur le composant 1, dans toutes les positions de ce dernier.

De préférence la densité de champ magnétique au voisinage de la première surface 5 et de la deuxième surface 7 est supérieure ou égale à 100000 A / m.

Avantageusement le dispositif 10 comporte des moyens de blindage 20, en matériaux magnétiques doux, qui sont agencés pour interdire l'action de tout champ magnétique à composante radiale par rapport à l'axe de pivotement D, au voisinage des première 5 et deuxième 7 surfaces de contact.

Par exemple, ces moyens de blindage 20 comportent au moins une partie tubulaire 21, 22 axée sur l'axe de pivotement D et entourant la première masse 4 et la deuxième masse 6, et au moins la deuxième extrémité 3 du composant 1, tel que visible sur les figures 6, 7 et 8.

Dans une variante électrostatique voisine de l'invention, de façon similaire, le choix du matériau du composant 1, et la détermination de l'électrisation, selon le cas, de la première masse 4 et de la deuxième masse 6 d'une part, ou/et du composant 1 d'autre part, sont effectués de façon à ce que le premier champ électrostatique et le deuxième champ électrostatique exercent sur le composant 1 des forces d'attraction au moins supérieures de 30% à la force d'attraction de la pesanteur sur le composant 1, et de préférence supérieures à cinq à dix fois la force d'attraction de la pesanteur sur le composant 1 pour obtenir le meilleur comportement lors du mouvement de la pièce d'horlogerie.

Les figures 3, 4, et 6 illustrent un appui direct du composant 1 sur la surface 5 de la première masse polaire 4, la figure 7 illustre un appui indirect où la première extrémité 2 du composant 1 est en appui sur une surface 5 qui appartient à une entretoise 18, elle-même en appui sur la première masse polaire 4, ou à proximité immédiate de celle-ci, de façon à ne pas réduire l'effet du champ d'attraction, magnétique selon le cas, exercé entre le composant 1 et la masse polaire 4. De la même façon, en cas d'utilisation d'entretoises 18, 19, ou de traitements de surface sur les surfaces 5 et 7 des masses polaires 4 et 6, il convient de choisir les matériaux de ces entretoises ou de ces traitements, les procédés de traitement, et le dimensionnement, surtout en épaisseur, de façon à ne pas réduire l'effet du champ d'attraction magnétique exercé entre la première extrémité 2 du composant 1 et la masse polaire 4 d'une part, et entre la deuxième extrémité 3 du composant 1 et la deuxième masse polaire 6 d'autre part.

De préférence, au moins la première surface 5 comporte un revêtement dur ou est constituée par une surface dure d'une entretoise 18, laquelle est interposée entre la première masse 4 et le composant 1. Une entretoise similaire 19 peut être interposée entre la deuxième masse 6 et le composant 1

Le dispositif 10 comporte encore, avantageusement des moyens de bouclage de champ magnétique entre la première masse 4 et la deuxième masse 6, par exemple par une bride externe. La figure 12 d'une variante magnétique montre la première masse polaire 4 magnétiquement solidaire d'un premier bras 41 en matériau ferromagnétique, la deuxième masse polaire 6 magnétiquement solidaire d'un deuxième bras 42 en matériau ferromagnétique, lequel est plaqué sur un pôle d'une source magnétique 40, aimant ou similaire, le premier bras 41 étant plaqué sur l'autre pôle de cette source magnétique 40. Les moyens de blindage 20 sont alors interposés entre la source magnétique 40 et le domaine de coopération du composant 1 et des masses polaires 4 et 6 selon la direction D. Cette configuration peut s'appliquer dans tous les cas considérés: composant 1 perméable magnétiquement et masses polaires 4 et 6 magnétiques, composant 1 magnétique et masses polaires 4 et 6 perméables magnétiquement, composant 1 magnétique et masses polaires 4 et 6 magnétiques. Ce transfert du champ, ici représenté comme latéral, mais qui peut occuper toute autre configuration dans l'espace, notamment en fonction du volume disponible dans un mouvement horloger ou dans une pièce d'horlogerie, permet de transférer, vers la direction de pivotement D, un champ émis à distance de cette zone. Il offre l'avantage de permettre un dimensionnement très supérieur des sources de champ.

Dans une réalisation voisine de l'invention, l'attraction entre les masses polaires 4, 6, et le composant 1 est de nature électrostatique. La conception décrite ici pour une attraction magnétique reste valable. Toutefois il est plus difficile d'assurer une charge électrostatique suffisante pour obtenir des forces et couples électrostatiques très supérieurs aux forces et couples de pesanteur et issus du mécanisme avec lequel coopère le composant 1. La notion de permittivité relative ou constante diélectrique se substitue alors à la notion de perméabilité magnétique, et la notion de champ électrostatique se substitue à celle de champ magnétique. La construction du dispositif de guidage 10 est entièrement similaire, et est dimensionnée en fonction des champs électrostatiques permanents établis entre le composant 1 et les masses polaires 4 et 6.

Selon une caractéristique particulière, la première masse polaire 4 et la deuxième masse polaire 6 sont chacune mobile dans une chambre entre deux butées.

En somme, dans cette variante voisine de l'invention faisant appel à des forces et couples électrostatiques, il est possible d'utiliser un matériau conducteur, soit pour le composant 1 si les masses polaires 4 et 6 sont électrisées et chargées avec une énergie suffisante, soit pour les masses polaires 4 et 6 si c'est le composant 1 qui est électrisé et chargé, ce matériau conducteur est polarisé par induction grâce aux pièces qui sont chargées de manière permanente. Une variante similaire est obtenue avec l'utilisation d'un diélectrique, isolant ou semi-conducteur, à la place d'un conducteur, la polarisation est alors limitée à la surface du diélectrique, et la force et le couple d'attraction sont inférieurs à ceux développés quand le matériau est conducteur, mais permettent encore cette utilisation dans le cas d'une montre.

Il est encore possible, dans une autre variante voisine de l'invention, de cumuler l'action de forces et couples électrostatiques et de forces et couples magnétiques.

L'invention concerne encore un pivot 100 magnétique comportant un tel composant horloger 1 en matériau au moins partiellement perméable magnétiquement ou respectivement au moins partiellement magnétique, monté en pivot dans une chambre 1A entre une première extrémité 2 et une deuxième extrémité 3 que comporte ce composant 1.

Ce pivot 100 magnétique comporte un dispositif 10 de guidage en pivotement du composant horloger 1 comportant, à une distance d'entrefer E supérieure, de la valeur d'un jeu fonctionnel déterminé J, à l'entraxe L entre la première extrémité 2 et la deuxième extrémité 3, une première surface 5 d'une première masse polaire 4 et une deuxième surface 7 d'une deuxième masse polaire 6. Ces masses polaires 4; 6 sont agencées pour, ou bien être attirée chacune par un champ magnétique émis par une des première extrémité 2 ou deuxième extrémité 3 du composant 1, ou bien pour générer chacune un champ magnétique attirant une des première extrémité 2 ou deuxième extrémité 3 du composant 1, ces champs magnétiques étant d'intensité différente l'un de l'autre, de façon à ce que les forces d'attraction magnétiquess s'exerçant sur le composant 1 à ses deux extrémités 2, 3 soient d'intensité différente, de façon à attirer le composant 1 par une de ses deux extrémités 2, 3, en contact direct ou indirect sur une seule des surfaces 5, 7 des masses polaires 4, 6.

De préférence, ce pivot 100 ^^comporte un dispositif de guidage 10 tel que décrit ci-dessus, dans l'une de ses variantes. Il comporte encore un composant 1 comportant une partie sensiblement arbrée en matériau au moins perméable magnétiquement, ou au moins magnétique, s'étendant entre une première extrémité 2 et une deuxième extrémité 3 définissant ensemble un axe longitudinal D1. Le dispositif de guidage 10 comporte des moyens d'accès pour l'insertion du composant 1 dans l'entrefer. Ou bien le dispositif de guidage 10 est réalisé démontable en plusieurs parties comportant des moyens de coopération entre eux ou/et avec un pont 31 ou/et une platine 30 pour permettre le montage du composant 1 en appui par sa première extrémité 2 sur une première partie comportant la première surface 5 et la première masse 4, préalablement au montage d'une deuxième partie comportant la deuxième surface 7 et la deuxième masse 6.

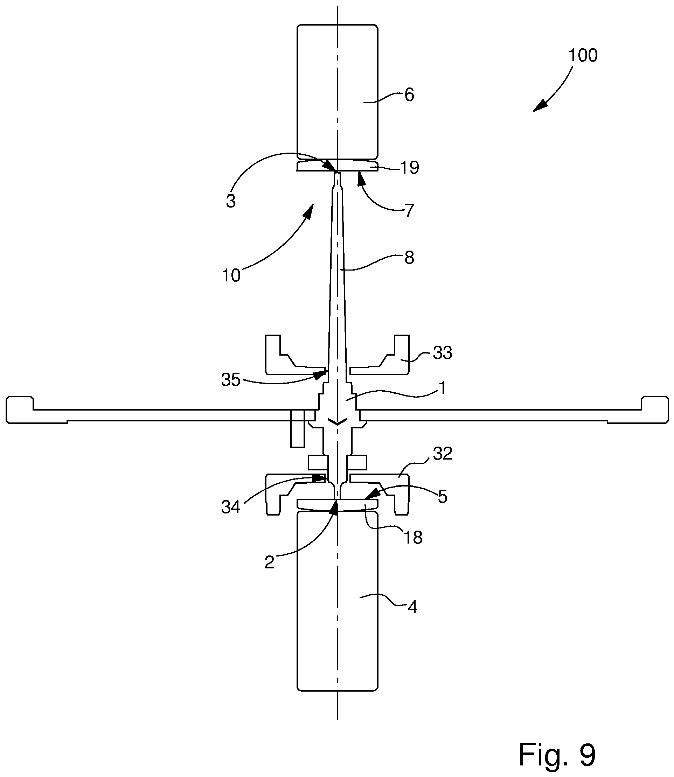

Selon l'invention, et de façon particulièrement avantageuse, tel que visible sur les figures 8 et 9, le composant 1 présente une partie fuselée 8, de révolution autour de l'axe longitudinal D1, et de section dégressive depuis le centre de gravité du composant 1 vers la deuxième extrémité 3, de façon à améliorer le gradient de champ magnétique au voisinage de la deuxième surface 7, et à faciliter le centrage de la deuxième extrémité 3 sur l'axe de pivotement D.

Quand le pivot 100 comporte un composant 1 appartenant à un oscillateur, avantageusement ce composant 1 est équilibré dynamiquement, pour sa vitesse de pivotement maximale, autour de l'axe longitudinal D1.

De préférence, la première extrémité 2 du composant 1 est agencée avec une surface de contact ponctuelle avec la première surface 5, la surface de contact ponctuelle étant localement sphérique ou conique.

Avantageusement, la première surface 5 comporte une surface de réception agencée pour coopérer avec la première extrémité 2, la surface de réception étant creuse et localement sphérique ou conique.

Dans une application très avantageuse de l'invention, le composant 1 est un balancier, dont l'axe de pivotement D est confondu avec l'axe longitudinal D1.

Pour une efficacité maximale de l'invention, si la partie arbrée du composant 1 est en matériau ferromagnétique ou aimanté, ou comporte des zones dans un tel matériau, selon la direction de l'axe longitudinal D1 du composant 1, il est avantageux que le reste du composant 1 soit en matériau dit amagnétique ou magnétiquement inerte, par exemple en silicium, ou dans un matériau de perméabilité magnétique relative inférieure à 1.0001 et réalisé notamment par les technologies MEMS, ou « LIGA », ou similaire, ou encore dans un matériau au moins partiellement amorphe. Dans le cas particulier d'un balancier, au moins la serge et les bras sont de préférence réalisées dans un tel matériau, il en est de même du spiral qui lui est associé. Ainsi il n'y a pas de perturbation réciproque entre l'oscillateur et le dispositif de guidage en pivotement 10. Avantageusement tous les mobiles proches des extrémités 2 et 3 du composant 1 sont réalisés en de tels matériaux dits amagnétiques.

Une réalisation avec un balancier-spiral monobloc en silicium comportant, soit un arbre magnétique ou en matériau perméable magnétiquement traversant en son axe principal d'inertie, soit deux demi-axes alignés de part et d'autre du balancier sur ce même axe, magnétiques ou en matériau perméable magnétiquement, est particulièrement avantageuse.

Le pivot 100 peut adopter trois configurations :

- il comporte un composant 1 comportant une partie sensiblement arbrée en matériau perméable magnétiquement, et la première masse 4 et la deuxième masse 6 sont chacune en matériau magnétique.

- il comporte un composant 1 comportant une partie sensiblement arbrée en matériau magnétique, et la première masse 4 et la deuxième masse 6 sont chacune en matériau perméable magnétiquement.

- il comporte un composant 1 comportant une partie sensiblement arbrée en matériau magnétique, et la première masse 4 et la deuxième masse 6 sont chacune en matériau magnétique.

Naturellement il est possible de créer une configuration avec des champs de nature différente aux deux extrémités du composant 1, magnétique à une extrémité, électrostatique à l'autre.

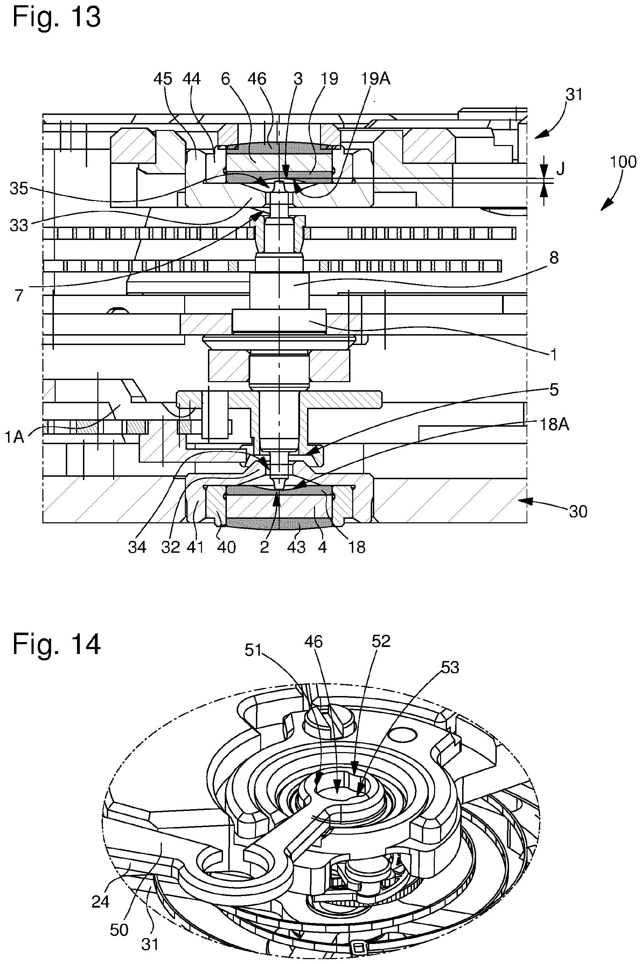

Les figures 13 et 14 illustrent un mode avantageux de réalisation, en raison de sa grande compacité, et de son épaisseur totale faible permettant son emploi dans un mouvement ou une pièce d'horlogerie de faible épaisseur. Le pivot 100, ici illustré come magnétique, comporte ici un ensemble amortisseur,

La surface d'appui 18A est un secteur sphérique concave poli réalisé dans une pierre 18. Celle-ci est plaquée sur un aimant permanent 4, lequel développe un champ magnétique rémanent supérieur à 1 Tesla. A l'opposé de la pierre 18 par rapport à l'aimant 4 est disposée une pierre d'appui 43 comportant un profil convexe poli. La pierre 18, l'aimant 4 et la pierre d'appui 43, sont insérés ensemble dans un chaton 40, réalisé par exemple en cupro-beryllium. De préférence la pierre 19 et la pierre d'appui 46 sont montées dans le chaton 40 avec un serrage ou un collage, ou un moyen de maintien, garantissant une tenue supérieure à 1N. Ce chaton 40 coulisse librement dans un bloc 41, lequel comporte une ouverture 34 pour le passage de la première extrémité 2 du composant 1, ici constitué par un ensemble balancier-spiral. Ce bloc 41 comporte, au voisinage de cette ouverture 34, un antichoc radial ou un amortisseur radial 32, constitué notamment par une portée de révolution autour de l'axe D.

L'ensemble est assemblé de façon à ce que la première extrémité 2 du composant 1 soit mobile en appui dans la cuvette convexe 18A, et à ce que la pierre d'appui 43 présente son secteur convexe à l'autre extrémité. Ce bloc extérieur 41 fait fonction de butée lors de chocs sur le composant 1.

De préférence, la première extrémité 2 du composant ou du balancier 1, comporte une courbure, qui est inférieure à celle de la calotte concave de la pierre 18, afin d'assurer le contact sur un seul pont. La courbure concave 18A de la pierre 18 permet de diminuer la distance d'entrefer entre la masse polaire 6 et la première extrémité 2 du composant 1, et constitue aussi un réservoir pour l'huile.

Du côté de la deuxième extrémité 3 du composant 1, un assemblage similaire est installé. La surface d'appui 19A est un secteur sphérique concave poli réalisé dans une pierre 19. Celle-ci est plaquée sur un aimant permanent 6, lequel développe un champ magnétique rémanent supérieur à 1 Tesla. A l'opposé de la pierre 19 par rapport à l'aimant 4 est disposée une pierre d'appui 46 comportant un profil convexe poli. La pierre 19, l'aimant 6 et la pierre d'appui 46, sont insérés ensemble dans un chaton 44, réalisé par exemple en cupro-beryllium. Ce chaton 44 coulisse librement dans un bloc 45, lequel comporte une ouverture 35 pour le passage de la deuxième extrémité 3 du composant 1. Ce bloc 45 comporte, au voisinage de cette ouverture 35, un antichoc radial ou un amortisseur radial 33, constitué notamment par une portée de révolution autour de l'axe D. L'ensemble est assemblé de façon à ce que la deuxième extrémité 3 du composant 1 soit mobile en appui dans la cuvette convexe 19A, et à ce que la pierre d'appui 46 présente son secteur convexe à l'autre extrémité. La figure 4 illustre ce montage d'extrémité du côté de la deuxième extrémité 3, qui est amorti par un amortisseur constitué par un bras élastique 50 pare-chute. Ce bras élastique 50, tel que visible sur la figure 5, est fixé sur une platine 30 ou sur un pont 31, il comporte une extrémité libre, qui vient en appui sur la calotte convexe de la pierre d'appui 46, par au moins une surface de contact, et, dans cette exemple préféré par trois zones de contact 51, 52, 53 disposées en triangle. L'effort est donc parfaitement réparti, et le maintien axial de l'ensemble porteur de la deuxième masse polaire 6 est assuré. Un tel bras élastique pare-chute est de préférence monté avec une précontrainte de l'ordre de 0,5 N.

On comprend que le même assemblage peut être implanté, de façon symétrique, en appui sur la pierre d'appui 43, au voisinage de la première extrémité 2 du composant 1.

Les aimants 4 et 6 sont de préférence des aimants permanents Nd-Fe-B, par exemple de type « Vacodym® » de « Vacuumschmelze GmbH ».

L'invention concerne encore un mouvement d'horlogerie 1000 comportant au moins un tel pivot 100 magnétique.

L'invention concerne encore une pièce d'horlogerie comportant au moins un tel mouvement d'horlogerie 1000, ou/et au moins un tel pivot 100.

## Revendications

1. Procédé d'orientation, pour son guidage en pivotement, d'un composant (1) horloger en matériau au moins partiellement perméable magnétiquement, ou au moins partiellement magnétique, comportant une première extrémité (2) et une deuxième extrémité (3) définissant un axe longitudinal (D1) et distantes d'un entraxe (L), où on crée de part et d'autre desdites première extrémité (2) et deuxième extrémité (3), au niveau d'une première (4) et d'une deuxième masse polaire (6) appartenant à un dispositif de guidage (10), un premier champ magnétique et un deuxième champ magnétique de même direction et de sens opposés, chacun de symétrie de révolution autour d'un axe de pivotement (D), tendant chacun à attirer ledit composant (1) sur une desdites masses polaires (4 ; 6), et où on crée un déséquilibre entre lesdits champs magnétiques, asymétriques l'un par rapport à l'autre et d'intensité différente l'un de l'autre, autour dudit composant (1) de manière à créer un différentiel de forces sur ce dernier pour plaquer ladite première extrémité (2) dudit composant (1) sur une première surface (5) appartenant à ladite première masse polaire (4), et pour maintenir ladite deuxième extrémité (3) à distance d'une deuxième surface (7) appartenant à ladite deuxième masse polaire (6), ledit déséquilibre étant créé autour de l'espace compris entre ladite première surface (5) et ladite deuxième surface (7) qui sont séparées d'une distance d'entrefer (E) qui assure un jeu fonctionnel déterminé (J) supérieur ou égal à 0,020 mm sur toute la plage de températures d'utilisation dudit dispositif de guidage (10) et dudit composant (1), **caractérisé en ce que** la perméabilité magnétique du matériau dudit composant est choisie et l'aimantation de ladite première masse (4) et de ladite deuxième masse (6) d'une part, ou/et dudit composant (1) d'autre part est déterminée, de façon à ce que ledit premier champ magnétique et ledit deuxième champ magnétique exercent sur ledit composant (1) des forces d'attraction supérieures à dix fois la force d'attraction de la pesanteur, et **caractérisé en ce qu'**on oriente ledit composant horloger (1) sur ledit axe de pivotement (D), et encore **caractérisé en ce qu'**on agence ledit dispositif de guidage (10) avec des moyens d'accès pour l'insertion dudit composant (1) dans ledit entrefer, ou bien **en ce qu'**on réalise ledit dispositif de guidage (10) démontable en plusieurs parties comportant des moyens de coopération entre eux ou/et avec un pont (31) ou/et une platine (30) pour permettre le montage dudit composant (1) en appui par sa dite première extrémité (2) sur une première partie comportant la dite première surface (5) et ladite première masse (4), préalablement au montage d'une deuxième partie comportant ladite deuxième surface (7) et ladite deuxième masse (6), et **caractérisé en ce qu'**on réalise ledit composant (1) monobloc, **en ce qu'**on effectue un traitement de surface particulier pour réaliser une discontinuité magnétique entre sa dite première extrémité (2) et sa dite deuxième extrémité (3), et **caractérisé en ce qu'**on agence ledit dispositif (10) de guidage avec des moyens de blindage (20) agencés pour interdire l'action de tout champ magnétique à composante radiale par rapport audit axe de pivotement (D), au voisinage desdites première (5) et deuxième (7) surfaces de contact, lesquels moyens de blindage (20) comportent au moins une partie tubulaire (21 ; 22) axée sur ledit axe de pivotement (D) et entourant ladite première masse (4) et ladite deuxième masse (6), et au moins ladite deuxième extrémité (3) dudit composant (1), et **caractérisé en ce qu'**on réalise ledit composant (1) avec une partie fuselée (8) de révolution autour dudit axe longitudinal (D1) et de section dégressive depuis le centre de gravité dudit composant (1) vers ladite deuxième extrémité (3), de façon à améliorer le gradient de champ magnétique au voisinage de ladite deuxième surface (7), et à faciliter le centrage de ladite deuxième extrémité (3) sur ledit axe de pivotement (D).

2.  Pivot (100) d'horlogerie comportant un composant horloger (1) en matériau au moins partiellement perméable magnétiquement ou au moins partiellement magnétique, lequel composant (1) comporte une première extrémité (2) et une deuxième extrémité (3) distantes d'un entraxe (L) et définissant ensemble un axe longitudinal (D1), où ledit pivot (100) comporte un dispositif (10) de guidage en pivotement dudit composant horloger (1) comportant une première surface (5) d'une première masse polaire (4) et une deuxième surface (7) d'une deuxième masse polaire (6), ladite première surface (5) et ladite deuxième surface (7) définissant un axe de pivotement (D) et étant séparées d'une distance d'entrefer (E) qui est la somme entre, d'une part ledit entraxe (L), et d'autre part un jeu fonctionnel déterminé (J) supérieur ou égal à 0,020 mm sur toute la plage de températures d'utilisation dudit dispositif de guidage (10) et dudit composant (1) disposé entre lesdites masses polaires (4, 6) lesquelles sont chacune en matériau magnétique et sont agencées pour, ou bien être attirée chacune par un champ magnétique, émis par une desdites première extrémité (2) ou deuxième extrémité (3) dudit composant (1), ou bien pour générer chacune un champ magnétique, attirant une desdites première extrémité (2) ou deuxième extrémité (3) dudit composant (1), et où lesdits champs magnétiques sont asymétriques l'un par rapport à l'autre et d'intensité différente l'un de l'autre autour dudit entrefer, en ce que la densité du premier champ magnétique au voisinage de ladite première extrémité (2) est supérieure à celle du deuxième champ magnétique au voisinage de ladite deuxième extrémité (3), de façon à ce que les forces d'attraction magnétiques s'exerçant sur ledit composant (1) à ses deux extrémités (2; 3) soient d'intensité différente, de façon à attirer ladite première extrémité (2) au contact de ladite première masse polaire (4), et où ledit composant (1) comporte une partie arbrée entre ladite première extrémité (2) et ladite deuxième extrémité (3), **caractérisé en ce que** ledit dispositif de guidage (10) comporte des moyens d'accès pour l'insertion dudit composant (1) dans ledit entrefer, ou bien **en ce que** ledit dispositif de guidage (10) est réalisé démontable en plusieurs parties comportant des moyens de coopération entre eux ou/et avec un pont (31) ou/et une platine (30) pour permettre le montage dudit composant (1) en appui par sa dite première extrémité (2) sur une première partie comportant la dite première surface (5) et ladite première masse (4), préalablement au montage d'une deuxième partie comportant ladite deuxième surface (7) et ladite deuxième masse (6), et **caractérisé en ce que** ledit composant (1) est monobloc, et **en ce qu'**il y a une discontinuité magnétique entre sa dite première extrémité (2) et sa dite deuxième extrémité (3), et **caractérisé en ce que** ledit dispositif (10) de guidage comporte des moyens de blindage (20) agencés pour interdire l'action de tout champ magnétique à composante radiale par rapport audit axe de pivotement (D), au voisinage desdites première (5) et deuxième (7) surfaces de contact, lesquels moyens de blindage (20) comportent au moins une partie tubulaire (21 ; 22) axée sur ledit axe de pivotement (D) et entourant ladite première masse (4) et ladite deuxième masse (6), et au moins ladite deuxième extrémité (3) dudit composant (1), et caractérisé et **en ce que** ledit composant (1) présente une partie fuselée (8), de révolution autour dudit axe longitudinal (D1), et de section dégressive depuis le centre de gravité dudit composant (1) vers ladite deuxième extrémité (3), de façon à améliorer le gradient de champ magnétique au voisinage de ladite deuxième surface (7), et à faciliter le centrage de ladite deuxième extrémité (3) sur ledit axe de pivotement (D), et encore **caractérisé en ce que** ledit premier champ magnétique et ledit deuxième champ magnétique exercent sur ledit composant (1) des forces d'attraction supérieures à dix fois la force d'attraction de la pesanteur.

3.  Pivot (100) selon la revendication 2, **caractérisé en ce que** ledit composant (1) est un balancier ou un balancier-spiral dont l'axe de pivotement (D) est confondu avec ledit axe longitudinal (D1).

4.  Pivot (100) selon la revendication 3, **caractérisé en ce que** au moins la serge et les bras dudit balancier sont réalisés en matériau magnétiquement inerte, ou bien en silicium, ou bien dans un matériau à très faible perméabilité magnétique, ou bien dans un ma-

13

tériau au moins partiellement amorphe, et que ledit balancier comporte, ou bien un arbre magnétique ou en matériau perméable magnétiquement, le traversant en son axe principal d'inertie, ou bien deux demi-axes alignés de part et d'autre du balancier sur ce même axe, magnétiques ou perméables magnétiquement.

5. Mouvement d'horlogerie (1000) comportant au moins un pivot (100) selon l'une des revendications 2 à 4.

6. Montre comportant au moins un mouvement d'horlogerie (1000) selon la revendication 5, ou/et au moins un pivot (100) selon l'une des revendications 2 à 4.

**Patentansprüche**

1. Verfahren zum Ausrichten einer Uhrenkomponente aus einem mindestens teilweise magnetisch durchlässigen oder mindestens teilweise magnetischen Material für ihre Drehführung, die ein erstes Ende (2) und ein zweites Ende (3) aufweist, die eine Längsachse (D1) definieren und um einen Mittenabstand (L) beabstandet sind, wobei beiderseits des ersten Endes (2) und des zweiten Endes (3) in Bezug auf eine erste (4) und eine zweite Polmasse (6), die zu einer Führungsvorrichtung (10) gehören, ein erstes Magnetfeld bzw. ein zweites Magnetfeld mit derselben als auch entgegengesetzter Richtung erzeugt werden, von denen jedes um eine Drehachse (D) rotationssymmetrisch ist und bestrebt ist, die Komponente (1) zu einer der Polmassen (4; 6) anzuziehen, und wobei ein Feldungleichgewicht zwischen den Magnetfeldern, die relativ zueinander asymmetrisch sind und eine voneinander verschiedene Stärke besitzen, um die Komponente (1) erzeugt wird, derart, dass ein Kräftedifferential auf diese Letztere wirkt, um das erste Ende (2) der Komponente (1) gegen eine erste Oberfläche (5), die zu der ersten Polmasse (4) gehört, zu drücken und um das zweite Ende (3) in einem Abstand von einer zweiten Oberfläche (7), die zu der zweiten Polmasse (6) gehört, zu halten, wobei das Feldungleichgewicht um den Raum zwischen der ersten Oberfläche (5) und der zweiten Oberfläche (7) erzeugt wird, die um einen Luftspaltabstand (E) getrennt sind, der im gesamten Betriebstemperaturbereich der Führungsvorrichtung (10) und der Komponente (1) ein bestimmtes funktionales Spiel (J) größer oder gleich 0,020 mm sicherstellt, **dadurch gekennzeichnet, dass** die magnetische Durchlässigkeit des Materials der Komponente so gewählt ist und die Magnetisierung der ersten Masse (4) und der zweiten Masse (6) einerseits und der Komponente (1) andererseits so bestimmt ist, dass das erste Magnetfeld und das zweite Magnetfeld auf die Komponente (1) Anziehungskräfte größer als die zehnfache Erdanziehungskraft ausüben, und **dadurch gekennzeichnet, dass** die Uhrenkomponente (1) auf die Drehachse (D) ausgerichtet ist, und ferner **dadurch gekennzeichnet, dass** die Führungsvorrichtung (10) mit Zugangsmitteln zum Einsetzen der Komponente (1) in den Luftspalt ausgestattet ist oder dass die Führungsvorrichtung (10) zerlegbar in mehrere Teile hergestellt ist, umfassend Mittel zum Zusammenwirken miteinander und/oder mit einer Brücke (31) und/oder mit einer Platte (30), um die Montage der Komponente (1) abstützend mit ihrem ersten Ende (2) auf einem ersten Teil, der die erste Oberfläche (5) und die erste Masse (4) aufweist, vor der Montage eines zweiten Teils, der die zweite Oberfläche (7) und die zweite Masse (6) aufweist, zu ermöglichen, und **dadurch gekennzeichnet, dass** die Komponente (1) einteilig ausgebildet ist und dass eine besondere Oberflächenbearbeitung ausgeführt wird, um eine magnetische Diskontinuität zwischen ihrem ersten Ende (2) und ihrem zweiten Ende (3) auszubilden, und **dadurch gekennzeichnet, dass** die Führungsvorrichtung (10) mit Abschirmmitteln (20) gestaltet ist, die so angeordnet sind, dass sie die Wirkung eines Magnetfeldes mit radialer Komponente in Bezug auf die Drehachse (D) in der Umgebung der ersten (5) und der zweiten (7) Kontaktoberfläche verhindern, wobei die Abschirmmittel (20) mindestens einen rohrförmigen Teil (21; 22) aufweisen, der auf die Drehachse (D) zentriert ist und die erste Masse (4) und die zweite Masse (6) und mindestens das zweite Ende (3) der Komponente (1) umgibt, und **dadurch gekennzeichnet, dass** die Komponente (1) mit einem um die Längsachse (D1) rotationssymmetrischen spindelförmigen Teil (8) mit einem von dem Schwerpunkt der Komponente (1) zu dem zweiten Ende (3) abnehmenden Querschnitt ausgebildet ist, derart, dass der Gradient des Magnetfeldes in der Umgebung der zweiten Oberfläche (7) verbessert wird und die Zentrierung des zweiten Endes (3) auf die Drehachse (D) erleichtert wird.

2. Uhrenzapfen (100), umfassend eine Uhrenkomponente (1) aus einem mindestens teilweise magnetisch durchlässigen oder mindestens teilweise magnetischen Material, wobei die Komponente (1) ein erstes Ende (2) und ein zweites Ende (3) aufweist, die um einen Mittenabstand (L) voneinander beabstandet sind und zusammen eine Längsachse (D1) definieren, wobei der Zapfen (100) eine Drehführungsvorrichtung (10) für die Uhrenkomponente (1) aufweist, umfassend eine erste Oberfläche (5) einer ersten Polmasse (4) und eine zweite Oberfläche (7) einer zweiten Polmasse (6), wobei die erste Oberfläche (5) und die zweite Oberfläche (7) eine Drehachse (D) definieren und voneinander um einen Luftspaltabstand (E) getrennt sind, der die Summe ist einerseits aus dem Mittenabstand (L) und andererseits einem bestimmten funktionalen Spiel (J) größer oder gleich 0,020 mm im gesamten Betriebstemperaturbereich der Führungsvorrichtung (10) und der Komponente (1), die zwischen den Polmassen (4, 6) angeordnet ist, die jeweils aus einem magnetischen Material gebildet sind und so angeordnet sind, dass sie entweder jeweils durch ein von dem ersten Ende (2) oder dem zweiten Ende (3) der Komponente (1) erzeugten Magnetfeld angezogen werden oder jeweils ein Magnetfeld erzeugen, das das erste Ende (2) oder das zweite Ende (3) der Komponente (1) anzieht, und wobei die Magnetfelder relativ zueinander asymmetrisch sind und eine voneinander verschiedene Stärke um den Luftspalt besitzen, dass die Felddichte des ersten Magnetfeldes in der Umgebung des ersten Endes (2) größer ist als jene des zweiten Magnetfeldes in der Umgebung des zweiten Endes (3), derart, dass die magnetischen Anziehungskräfte, die auf die Komponente (1) an ihren beiden Enden (2; 3) wirken, von unterschiedlicher Stärke sind, so dass das erste Ende (2) in Kontakt mit der ersten Polmasse (4) angezogen wird, und wobei die Komponente (1) einen Wellenabschnitt zwischen dem ersten Ende (2) und dem zweiten Ende (3) aufweist, **dadurch gekennzeichnet, dass** die Führungsvorrichtung (10) Zugangsmittel zum Einsetzen der Komponente (1) in den Luftspalt umfasst, oder dass entweder die Führungsvorrichtung (10) zerlegbar in mehrere Teile hergestellt ist, umfassend Mittel zum Zusammenwirken miteinander und/oder mit einer Brücke (31) und/oder mit einer Platte (30), um die Montage der Komponente (1) abstützend mit ihrem ersten Ende (2) auf einem ersten Teil, der die erste Oberfläche (5) und die erste Masse (4) umfasst, vor der Montage eines zweiten Teils, der die zweite Oberfläche (7) und die zweite Masse (6) umfasst, zu ermöglichen, und **dadurch gekennzeichnet, dass** die Komponente (1) einteilig ausgebildet ist und dass zwischen ihrem ersten Ende (2) und ihrem zweiten Ende (3) eine magnetische Diskontinuität vorhanden ist, und **dadurch gekennzeichnet, dass** die Führungsvorrichtung (10) Abschirmmittel (20) aufweist, die so angeordnet sind, dass sie die Wirkung eines Magnetfeldes mit radialer Komponente in Bezug auf die Drehachse (D) in der Umgebung der ersten (5) und der zweiten (7) Kontaktoberfläche verhindern, wobei die Abschirmmittel (20) mindestens einen rohrförmigen Teil (21; 22) aufweisen, der auf die Drehachse (D) zentriert ist und die erste Masse (4) und die zweite Masse (6) und mindestens das zweite Ende (3) der Komponente (1) umgibt, und **dadurch gekennzeichnet, dass** die Komponente (1) einen um die Längsachse (D1) rotationssymmetrischen spindelförmigen Teil (8) mit einem vom Schwerpunkt der Komponente (1) zu dem zweiten Ende (3) hin abnehmenden Querschnitt aufweist, derart, dass der Gradient des Magnetfeldes in der Umgebung der zweiten Oberfläche (7) verbessert wird und die Zentrierung des zweiten Endes (3) auf die Drehachse (D) erleichtert wird, und ferner **dadurch gekennzeichnet, dass** das erste Magnetfeld und das zweite Magnetfeld auf die Komponente (1) Anziehungskräfte zehnmal höher als die Erdanziehungskraft ausüben.

3. Zapfen (100) nach Anspruch 2, **dadurch gekennzeichnet, dass** die Komponente (1) eine Unruh oder eine Unruh-Spiralfeder ist, deren Drehachse (D) mit der Längsachse (D1) zusammenfällt.

4. Zapfen (100) nach Anspruch 3, **dadurch gekennzeichnet, dass** mindestens der Unruhreif und die Arme der Unruh aus einem magnetisch trägen Material oder aus Silicium oder aus einem Material mit sehr geringer magnetischer Durchlässigkeit oder aus einem mindestens teilweise amorphen Material hergestellt sind und dass die Unruh entweder eine magnetische Welle oder eine Welle aus einem magnetisch durchlässigen Material umfasst, die sie längs ihrer Hauptträgheitsachse durchläuft oder aber längs zweier Halbachsen, die beiderseits der Unruh auf dieselbe Achse ausgerichtet sind und magnetisch oder magnetisch durchlässig sind.

5. Uhrwerk (1000), umfassend mindestens einen Zapfen (100) nach einem der Ansprüche 2 bis 4.

6. Uhr, umfassend mindestens ein Uhrwerk (1000) nach Anspruch 5 und/oder mindestens einen Zapfen (100) nach einem der Ansprüche 2 bis 4.

## Claims

1. Method for orienting a timepiece component (1) to guide the pivoting of said component, which is made of material that is at least partially magnetically permeable, or at least partially magnetic, including a first end (2) and a second end (3) defining a longitudinal axis (D1) and remote from a length (L), wherein, on both sides of said first (2) and second (3) ends, at a first (4) and a second pole piece (6) forming part of a guide device (10), a first magnetic field and a second magnetic field are created in the same direction and in opposite senses, each having revolution symmetry about a pivot axis (D), each tending to attract said component (1) onto one of said pole pieces (4; 6), and wherein an field unbalance is created between said asymmetrical magnetic fields relative to each other and of different intensity from each other, around said component (1), so as to create a differential in the forces thereon in order to press said first end (2) of said component (1) onto a first surface (5) forming part of said first pole piece (4), and to hold said second end (3) at a distance from a second surface (7) forming part of said second pole piece (6), said field unbalance being created around the space comprised between said first surface (5) and said second surface (7), which are separated by an air-gap distance (E) which ensures a determined operational play (J) greater than or equal to 0.020 mm over the entire range of temperatures of use of said guide device (10) and of said component (1), **characterized in that** the magnetic permeability of the material of said component is selected, and the magnetization of said first pole piece (4) and said second pole piece (6) on the one hand, and/or said component (1) on the other hand, is determined such that said first magnetic field and said second magnetic field exert on said component (1) attraction forces that are ten times greater than the gravitational force of attraction, and **characterized in that** said timepiece component (1) is oriented on said pivot axis (D), and further **characterized in that** said guide device (10) is arranged with access means for inserting said component (1) into said air-gap, or **in that** said guide device (10) can be dismantled into several parts including means for cooperating with each other and/or with a bridge (31), and/or a plate (30), to enable said component (1) to be mounted resting, via said first end (2) thereof, on a first part including said first surface (5) and said first pole piece (4), prior to the assembly of a second part including said second surface (7) and said second pole piece (6), and **characterized in that** said component (1) is made in one piece, **in that** a specific surface treatment is carried out to produce a magnetic discontinuity between said first end (2) thereof and said second end (3) thereof, and **characterized in that** said guide device (10) is arranged with shielding means (20) arranged to prevent the action of any magnetic field with a radial component relative to said pivot axis (D), in proximity to said first (5) and second (7) contact surfaces, which shielding means (20) include at least one tubular part (21; 22) centred on said pivot axis (D) and surrounding said first pole piece (4) and said second pole piece (6), and at least said second end (3) of said component (1), and **characterized in that** said component (1) is made with a spindle-shaped portion (8) rotating about said longitudinal axis (D1), whose section decreases from the centre of gravity of said component (1) towards said second end (3), so as to improve the magnetic field gradient, in proximity to said second surface (7) and to facilitate the centring of said second end (3) on said pivot axis (D).

2. Horological pivot (100) including a timepiece component (1) made of material that is at least partially magnetically permeable, or at least partially magnetic, which component (1) includes a first end (2) and a second end (3), remote from a length (L) and jointly defining a longitudinal axis (D1), wherein said pivot (100) includes a device (10) for guiding the pivoting of said timepiece component (1), including a first surface (5) of a first pole piece (4) and a second surface (7) of a second pole piece (6), said first surface (5) and said second surface (7) defining a pivot axis (D) and being separated by an air-gap distance (E) which is the sum between, on the one hand said length (L), and on the other hand a determined operational play (J) greater than or equal to 0.020 mm over the entire range of temperatures of use of said guide device (10) and of said component (1) arranged between said pole pieces (4, 6), which are each made of a magnetic material and are arranged either each to be attracted by a magnetic field transmitted by one of said first (2) or second (3) ends of said component (1), or each to generate a magnetic field attracting one of said first (2) or second (3) ends of said component (1), and wherein said magnetic fields are asymmetrical to each other and of different intensity from each other about said air-gap, in that the density of the first magnetic field in proximity to said first end (2) is greater than that of the second magnetic field in proximity to said second end (3), such that the magnetic attraction forces being exerted on said component (1) at the two ends (2; 3) thereof are of different intensity, so as to attract said first end (2) into contact with said first pole piece (4), and wherein said component (1) comprises a shaft-like portion between said first end (2) and said second end (3), **characterized in that** said guide device (10) comprises access means for inserting said component (1) into said air-gap, or **in that** said guide device (10) can be dismantled into several parts including means for cooperating with each other and/or with a bridge (31), and/or a plate (30), to enable said component (1) to be mounted resting, via said first end (2) thereof, on a first part including said first surface (5) and said first pole piece (4), prior to the assembly of a second part including said second surface (7) and said second pole piece (6), and **characterized in that** said component (1) is in one piece, and **in that** there is magnetic discontinuity between said first end (2) thereof and said second end (3) thereof, and **characterized in that** said guide device (10) comprises shielding means (20) arranged to prevent the action of any magnetic field with a radial component relative to said pivot axis (D), in proximity to said first (5) and second (7) contact surfaces, which shielding means (20) include at least one tubular part (21; 22) centred on said pivot axis (D) and surrounding said first pole piece (4) and said second pole piece (6), and at least said second end (3) of said component (1), and **characterized in that** said component (1) has a spindle-shaped portion (8) rotating about said longitudinal axis (D1), whose section decreases from the centre of gravity of said component (1) towards said second end (3), so as to improve the magnetic field gradient, in proximity to said second surface (7) and to facilitate the centring of said second end (3) on said pivot axis (D), and further **characterized in that** said first magnetic field and said second magnetic field exert on said component (1) attraction forces that are ten times greater than the gravitational force of attraction.

3.  Pivot (100) according to claim 2, **characterized in that** said component (1) is a balance or a sprung balance wherein the pivot axis (D) coincides with said longitudinal axis (D1).

4.  Pivot (100) according to claim 3, **characterized in that** at least the felloe and the arms of said balance are made of magnetically inert material, or silicon, or a material with very low magnetic permeability, or in an at least partially amorphous material, and **in that** said balance includes, either an arbour that is magnetic or made of magnetically permeable material, passing through the main axis of inertia thereof, or two semi arbours aligned on both sides of the balance on the same axis, and magnetic or magnetically permeable.

5.  Timepiece movement (1000) including at least one pivot (100) according to any of claims 2 to 4.

6.  Watch including at least one timepiece movement (1000) according to claim 5 and/or at least one pivot (100) according to any of claims 2 to 4.

# Fig. 1

# Fig. 2

# Fig. 3

# Fig. 4

# Fig. 5

Fig. 6

Fig. 7

Fig. 8

Fig. 9

## Fig. 10

Z

$M_B$

$F_m$

axe

$F_g$

$M_A$

r

r=0

## Fig. 12

6    42    20

N

1

40

10

S

4    41

D

## Fig. 11

## Fig. 13

## Fig. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1211460 B
- DE 19854063 A1, JAGMANN VLADIMIR
- DE 1220224 B
- FR 1115966 A
- DE 1734590
- GB 739979 A
- US 3496780 A,  CLAVELOUX NOEL
- US 3493275 A,  STONE RICHARD
- US 5218257 A, TOZONI OLEG
- GB 2407402 A, LEVINGSTON GIDEON
- WO 2006045824 A2, TAG HEUER